# EUROPEAN PATENT APPLICATION

(11) **EP 3 540 204 A1**
(43) Date of publication of application: **18.09.2019**
(21) Application number: 19161536.8
(22) Date of filing: 08.03.2019
(51) Int. Cl.: F02K 1/72

(54) **THRUST REVERSER CASCADE**

(30) Priority: 16.03.2018 US 201815923730
(71) Applicant: MRA Systems, LLC, Baltimore, MD 21220 (US)
(72) Inventor: SHETTY, Shailesh Kumar, Baltimore, MD Maryland 21220 (US); JONNALAGADDA, Dattu GV, Baltimore, 21220 (US); PERIASAMY, Murugesan, Baltimore, MD Maryland 21220 (US)
(74) Representative: Openshaw & Co.

(57) **Abstract**

A thrust reverser cascade (52, 152, 252, 352) can include a peripheral frame (60, 160, 260, 360) having at least one side (62, 66, 162, 166, 262, 266, 362, 366), and a plurality of vanes (70, 170, 270, 370) can be supported within the peripheral frame (60, 160, 260, 360). In addition, the thrust reverser cascade (52, 152, 252, 352) can include a reinforcement structure (180, 280, 380) supporting at least a portion of the peripheral frame (60, 160, 260, 360) or the plurality of vanes (70, 170, 270, 370).

## Description

### TECHNICAL FIELD

The disclosure relates to thrust reverser for a turbine engine and more specifically to a thrust reverser cascade.

### BACKGROUND

Turbine engines, and particularly gas or combustion turbine engines, are rotary engines that extract energy from a flow of combusted gases passing through the engine onto a multitude of turbine blades. Turbine engines have been used for land and nautical locomotion and power generation, but are most commonly used for aeronautical applications such as for aircraft, including helicopters. In aircraft, turbine engines can be used for propulsion.

Thrust reverser cascades can be used within turbine engines to provide a reverse thrust, e.g. for reducing speed of an aircraft, such as during landing. Reverse thrust can be achieved by deploying a door assembly with a cascade into a bypass duct; air can be diverted from an aft direction to a forward direction by way of the cascade.

### BRIEF DESCRIPTION

In one aspect, the disclosure relates to a thrust reverser cascade including an injection-molded peripheral frame having at least one side and made from a polymeric first material, a plurality of vanes supported within the peripheral frame, and a reinforcement structure at least partially embedded within at least a portion of the frame, the reinforcement structure supporting at least a portion of the frame or vanes and made from a second material different from the polymeric first material.

In another aspect, the disclosure relates to a thrust reverser cascade including an injection-molded peripheral frame having at least one side and made from a polymeric material, a plurality of vanes supported within the peripheral frame, and a reinforcement structure at least partially embedded within at least a portion of the frame and including twisted, braided, or woven fibers.

In yet another aspect, the disclosure relates to a thrust reverser cascade including an injection-molded peripheral frame having at least one side and made from a polymeric material, a plurality of vanes supported within the peripheral frame, and a reinforcement structure at least partially embedded within at least a portion of the frame and including strip inserts.

In still another aspect, the disclosure relates to a thrust reverser cascade including an injection-molded peripheral frame having opposing spaced sides and made from a polymeric first material, a plurality of stiffeners extending between the opposing spaced sides, a plurality of vanes supported within the peripheral frame, where a stiffener in the plurality of stiffeners extends between adjacent vanes, and a reinforcement structure made from a second material different from the polymeric first material, the reinforcement structure being at least partially embedded within at least a portion of the frame and including one of twisted fibers, braided fibers, woven mesh, or strip inserts, wherein the second material includes one of a non-polymeric material, a composite material, carbon, glass, shape memory alloy, steel, aluminum, aluminum alloy, titanium, titanium alloy, nickel-chromium alloy, or a composite of thermosetting polymer and at least one of poly-aramid fibers, carbon fibers, and fiberglass.

In even yet another aspect, the disclosure relates to a method of manufacturing a thrust reverser cascade. The method includes forming from a polymeric first material a peripheral frame for the thrust reverser cascade, the peripheral frame having opposing spaced sides and supporting a plurality of vanes therebetween, and coupling a non-polymeric or composite reinforcement structure to the peripheral frame.

### BRIEF DESCRIPTION OF THE DRAWINGS

In the drawings:
FIG. 1 is a schematic cross-sectional diagram of a turbine engine for an aircraft including an exemplary thrust reverser cascade in accordance with various aspects described herein.
FIG. 2 is a perspective view of an exemplary assembly of thrust reverser cascades, without the surrounding supporting structure, which can be utilized in the turbine engine of FIG. 1.
FIG. 3 is a perspective view of a thrust reverser cascade of the assembly of FIG. 2 including a first reinforcement structure.
FIG. 4 is a perspective view of a portion of the first reinforcement structure of FIG. 3.
FIG. 5 is a perspective view of another thrust reverser cascade of the assembly of FIG. 2 including a second reinforcement structure.
FIG. 6 is a schematic illustration of the second reinforcement structure of FIG. 5.
FIG. 7 is a perspective view of another thrust reverser cascade of the assembly of FIG. 2 including a third reinforcement structure.
FIG. 8 is a schematic illustration of the third reinforcement structure of FIG. 7 in a first configuration.
FIG. 9 is a schematic illustration of the third reinforcement structure of FIG. 7 in a second configuration.
FIG. 10 is a schematic illustration of the third reinforcement structure of FIG. 7 in a third configuration.
FIG. 11 illustrates reinforcement structures in the exemplary assembly of FIG. 2.

### DETAILED DESCRIPTION

The described aspects of the present disclosure are directed to a thrust reverser assembly, particularly in a turbine engine. For purposes of illustration, the present disclosure will be described with respect to an aircraft turbine engine. It will be understood, however, that the present disclosure is not so limited and can have general applicability in non-aircraft applications, such as other mobile applications and non-mobile industrial, commercial, and residential applications.

Traditional thrust reversers for medium to large turbofan engines can utilize a translating cowl design in which the translating cowl is translated axially aft to expose the cascades. A series of blocker doors can be rotated by this action to block the fan duct and re-direct flow through the cascades, which have a plurality of vanes for turning the flow forward to provide reverse thrust. The axial movement is typically achieved with a number of telescopic electrical, hydraulic or pneumatic actuators controlled and synchronized together.

As used herein, the term "forward" or "upstream" refers to moving in a direction toward the engine inlet, or a component being relatively closer to the engine inlet as compared to another component. The term "aft" or "downstream" refers to a direction toward the rear or outlet of the engine relative to the engine centerline.

Additionally, as used herein, the terms "radial" or "radially" refer to a dimension extending between a center longitudinal axis of the engine and an outer engine circumference.

It should be further understood that "a set" can include any number of the respectively described elements, including only one element.

All directional references (e.g., radial, axial, proximal, distal, upper, lower, upward, downward, left, right, lateral, front, back, top, bottom, above, below, vertical, horizontal, clockwise, counterclockwise, upstream, downstream, aft, etc.) are only used for identification purposes to aid the reader's understanding of the present disclosure, and do not create limitations, particularly as to the position, orientation, or use of the present disclosure. Connection references (e.g., attached, coupled, connected, and joined) are to be construed broadly and can include intermediate members between a collection of elements and relative movement between elements unless otherwise indicated. As such, connection references do not necessarily infer that two elements are directly connected and in fixed relation to one another. The exemplary drawings are for purposes of illustration only and the dimensions, positions, order and relative sizes reflected in the drawings attached hereto can vary.

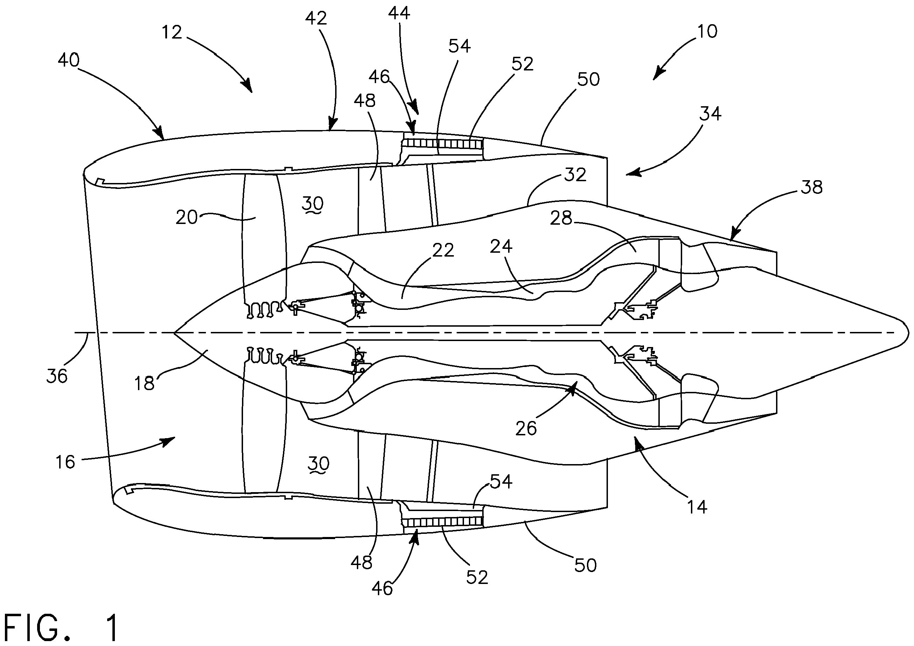

FIG. 1 schematically represents a gas turbine engine illustrating a thrust reverser assembly shown as a high-bypass turbofan engine 10 of a type known in the art. The engine 10 is schematically represented as including a nacelle 12 surrounding at least a portion of a core engine 14. A nacelle interior 46 can be defined by the nacelle 12. The engine 10 has a generally longitudinal extending axis or centerline 36 extending forward to aft. A fan assembly 16 located in front of the core engine 14 includes a spinner nose 18 projecting forwardly from an array of fan blades 20. The core engine 14 is schematically represented as including a high-pressure compressor 22, a combustor 24, a high-pressure turbine 26 and a low-pressure turbine 28. A large portion of the air that enters the fan assembly 16 is bypassed to the rear of the engine 10 to generate engine thrust. The bypassed air passes through an annular-shaped bypass duct 30 defining a fore-to-aft airflow conduit 31 between the nacelle 12 and an inner core cowl 32, and exits the bypass duct 30 through a fan exit nozzle 34. The inner core cowl 32 defines the radially inward boundary of the bypass duct 30, and provides a transition surface to a primary exhaust nozzle 38 that extends aft from the core engine 14. The nacelle 12 defines the radially outward boundary of the bypass duct 30. The bypassed fan air can flow through the bypass duct 30 defined by the nacelle 12 and inner core cowl 32 before being exhausted through the fan exit nozzle 34. One or more outlet guide vanes 48 can be provided within the bypass duct 30 downstream of the fan blades 20. The outlet guide vanes 48 can induce a helical, circumferential component on a flow of fluid driven by the fan, or can turn a circumferential flow to an axial flow.

The nacelle 12 can include three primary elements that define the external boundaries of the nacelle 12: an inlet assembly 40, a fan cowl 42 interfacing with an engine fan case that surrounds the fan blades 20, and a thrust reverser assembly 44 located aft of the fan cowl 42. The thrust reverser assembly 44 can include three primary components: a translating cowl 50 mounted to the nacelle 12, a thrust reverser cascade 52 (also referred to herein as a "cascade" 52) schematically represented within the nacelle 12, and multiple blocker doors 54 adapted to be pivotally deployed from a stowed position, shown in FIG. 1, where the blocker door 54 is radially inward from the thrust reverser cascade 52. The inner core cowl 32 of the core engine 14 is also part of the thrust reverser assembly 44, and the fore end of the blocker door 54 is pivoted into engagement or close proximity with the inner core cowl 32 when the blocker door 54 is fully deployed.

The thrust reverser cascade 52 can be a fixed structure of the nacelle 12 in one non-limiting example, whereas the translating cowl 50 is adapted to be translated aft to expose the cascade 52 and deploy the blocker door 54 into the bypass duct 30, causing bypassed air within the bypass duct 30 to be diverted through the exposed cascade 52 and thereby provide a thrust reversal effect. In another non-limiting example, the thrust reverser cascade 52 can be configured to translate aft with the translating cowl 50. Other configurations of the thrust reverser cascade 52 not explicitly described can also be used within the thrust reverser assembly 44. While two blocker doors 54 are shown in FIG. 1, a set of blocker doors 54 are typically circumferentially spaced around the nacelle 12.

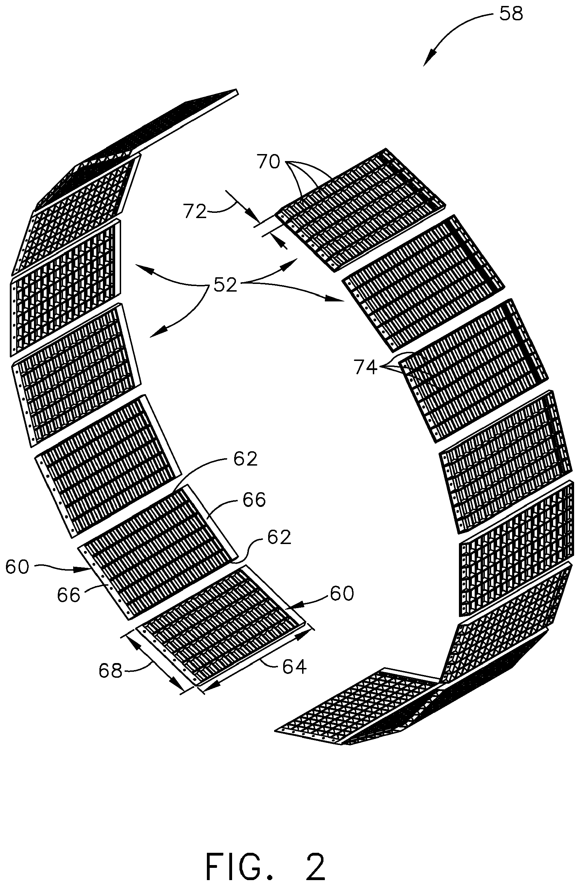

Referring now to FIG. 2, an annular cascade assembly 58 is illustrated wherein exemplary thrust reverser cascades 52 can be circumferentially arranged around the nacelle 12 of FIG. 1. Connecting structures between adjacent cascades 52 are omitted for clarity.

An exemplary cascade 52 can include a peripheral frame 60 with opposing frame sides 62 having side lengths 64, connected by opposing frame ends 66 having end lengths 68. The peripheral frame 60 is illustrated with an essentially rectangular shape; it will be understood that other geometric profiles including square, rounded, or irregular/asymmetric are also contemplated for use in the exemplary cascade 52. Further, while the opposing frame sides 62 and frame ends 66 are illustrated as having linear profiles, it is also contemplated that the frame sides 62 or frame ends 66 can have a curved profile. The peripheral frame 60 can be made from a polymeric material including, but not limited to, thermoplastic material, thermoset material, polyether ether ketone (PEEK), polyethylene terephthalate, high density polyethylene, polyvinyl chloride, polystyrene, polypropylene, polyesters, polybenzoxazine, polyurethane, silicone, phenolics, epoxy with amine, or epoxy with amide.

A plurality of vanes 70 having vane lengths 72 can be included in the cascade 52 and positioned within the peripheral frame 60. The vanes 70 can be arranged in a grid or array; in another example, the vanes can extend fully between the opposing frame sides 62. In still another example, the vanes 70 can each have varying vane lengths 72 in different regions of the cascade 52 as desired. Further, the vanes 70 can include any desired profile including flat, rectangular, airfoil-shaped, or rounded, in non-limiting examples.

A plurality of stiffeners 74 can also be included in the exemplary thrust reverser cascade 52. The stiffeners 74 are illustrated extending axially between the frame ends 66 and can extend through a vane 70, or be coupled between adjacent vanes 70, to additionally support the vanes 70 and peripheral frame 60. It is contemplated that the stiffeners 74 can be oriented within the cascade 52 in any desired direction. Furthermore, vanes 70 can be rotatable between stiffeners 74 or between frame ends 66; alternately, the vanes 70 can be fixed in place between stiffeners 74 or between frame ends 66.

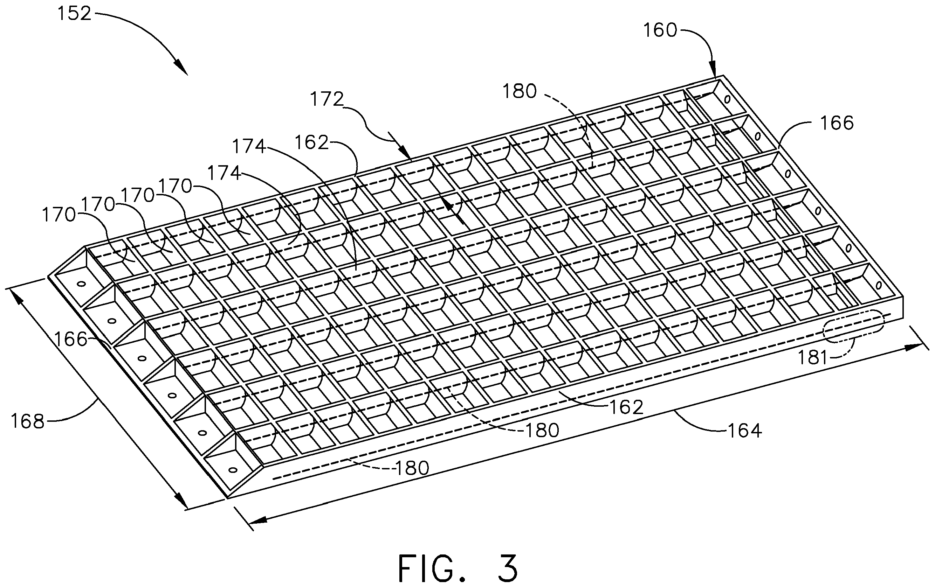

In operation, when the translating cowl 48 (FIG. 1) is deployed aft from its stowed position and the blocker doors 50 are deployed from their stowed positions, the bypassed fan air can be directed forward through the thrust reverser cascade 52 to provide reverse thrust for the engine 10. Air flowing through the cascade 52 and past the vanes 70 (FIG. 3) can generate stresses on the cascade 52, including within the frame sides 62, frame ends 66, vanes 70, or stiffeners 74.

Turning to FIG. 3, another thrust reverser cascade 152 is illustrated that can be used in the cascade assembly 58. The thrust reverser cascade 152 is similar to the thrust reverser cascade 52; therefore, like parts will be identified with like numerals increased by 100, with it being understood that the like parts of the cascade 52 applies to the cascade 152, unless otherwise noted.

The thrust reverser cascade 152 includes a peripheral frame 160 with opposing frame sides 162 having side lengths 164, connected by opposing frame ends 166 having end lengths 168. A plurality of vanes 170 and a plurality of stiffeners 174 can also be included in the cascade 152.

The cascade 152 further includes a first reinforcement structure 180 made from a non-polymeric material, non-limiting examples of which include metal, carbon, glass, fiberglass, or shape memory alloy. As used herein, "reinforcement structure" will refer to a structure that can be coupled, mated, attached, embedded, or otherwise connected to a separate body to provide reinforcement such as increased strength, sturdiness, stability, or rigidity. Additional non-limiting examples of materials which can be utilized in the first reinforcement structure 180 include steel, aluminum, aluminum alloy, titanium, titanium alloy, or nickel-chromium alloy. It is further contemplated that a composite material can be used for the first reinforcement structure 180 as desired.

The first reinforcement structure 180 can be coupled to the frame sides 162 or ends 166, including fully along the length 164 of a frame side 162, fully along the length 168 of a frame end 166, or fully along a vane length 172 of a vane 170. The first reinforcement structure 180 can also be coupled to at least a portion of a stiffener 174 as shown. It is contemplated that the first reinforcement structure 180 can be at least partially embedded within the peripheral frame 160, at least one vane 170, or at least one stiffener 174. For example, the first reinforcement structure 180 can be in-molded with polymeric material to form the peripheral frame 160, vane 170, or stiffener 174 around the first reinforcement structure 180. In other non-limiting examples, the first reinforcement structure 180 can be coupled to the frame 160, vane 170, or stiffener 174 by way of attachment hardware such as bolts or screws, welding methods, or adhesive bonding materials.

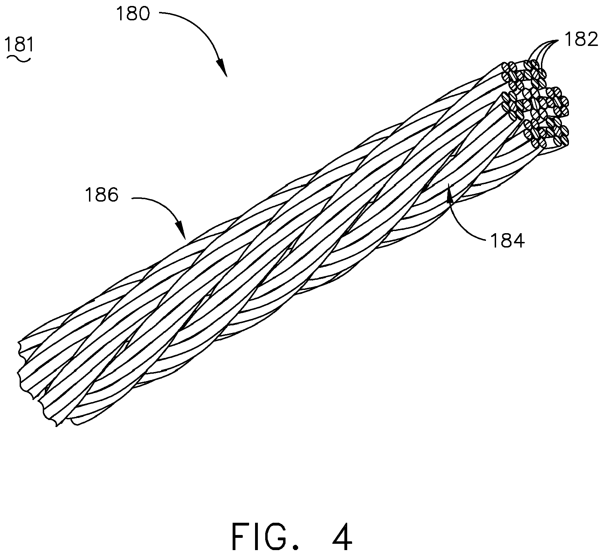

FIG. 4 illustrates that the first reinforcement structure 180 can include fibers 182 of non-polymeric material, e.g. carbon or metallic fibers in non-limiting examples. The fibers 182 can be braided or twisted into strands 184, and is illustrated in the example of FIG. 4 as forming a six-strand, Z-laid twisted fiber rope 186 which can extend along a frame side 162, vane 170, or stiffener 174 as described in FIG. 3. It is contemplated that the fibers 182 can be formed into any desired configuration of fiber rope 186, including single-strand or double-strand, Z-laid or S-laid, braid on braid, multibraid, parallel core, or hollow braid, in non-limiting examples. Other configurations such as wire cabling can also be utilized, e.g. as strands, in the first reinforcement structure 180.

It can be appreciated that during operation, the first reinforcement structure 180 can provide increased rigidity and strength for its supported polymeric component within the cascade 52 (e.g. peripheral frame 160, vanes 170, or stiffeners 174). The first reinforcement structure 180 can thereby form a more durable thrust reverser cascade 152 in a variety of operating conditions and loads.

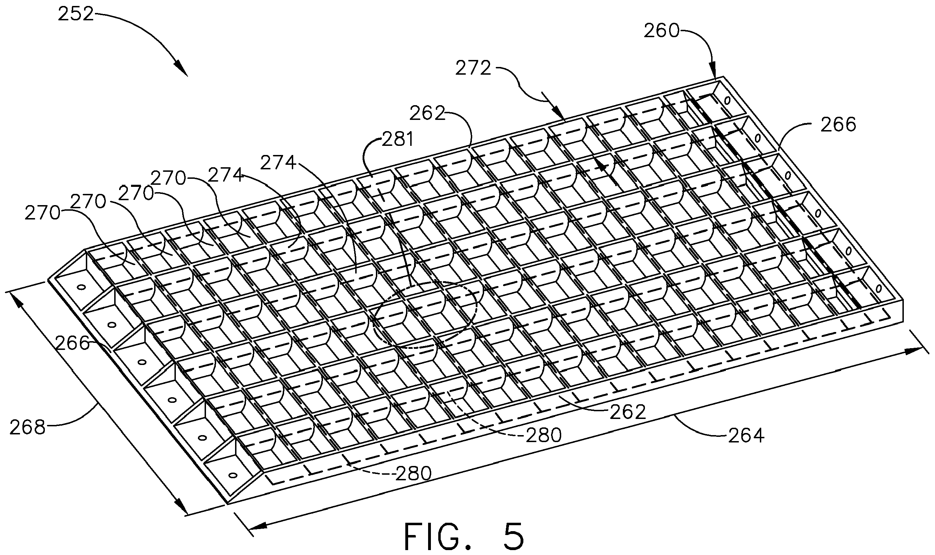

Turning to FIG. 5, another thrust reverser cascade 252 is illustrated which can be used in the cascade assembly 58. The thrust reverser cascade 252 is similar to the thrust reverser cascade 52; therefore, like parts will be identified with like numerals increased by 200, with it being understood that the like parts of the cascade 52 applies to the cascade 252, unless otherwise noted.

The thrust reverser cascade 252 includes a peripheral frame 260 with opposing frame sides 262 having side lengths 264, connected by opposing frame ends 266 having end lengths 268. A plurality of vanes 270 and a plurality of stiffeners 274 can also be included in the cascade 252.

The cascade 252 further includes a second reinforcement structure 280 made from a non-polymeric or composite material as described in FIG. 3. The second reinforcement structure 280 can be coupled to the frame sides 262 or ends 266, including fully along the length 264 of a frame side 262, fully along the length 268 of a frame end 266, or fully along a vane length 272 of a vane 270. The second reinforcement structure 280 can also be coupled to, or embedded within, at least a portion of a stiffener 274 as shown.

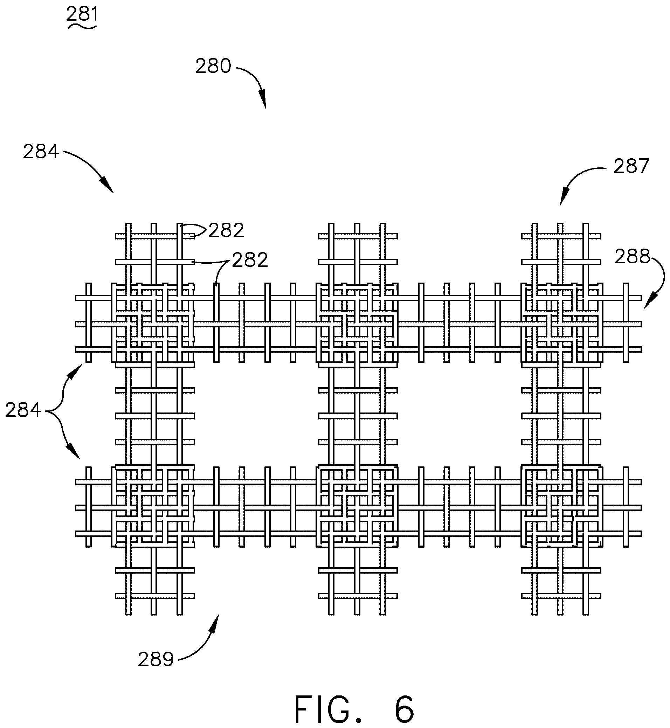

It is contemplated that the second reinforcement structure 280 can include a mesh 289, illustrated as a woven mesh. Referring now to FIG. 6, a portion 281 of the second reinforcement structure 280 is illustrated wherein fibers 282 are woven into strands 284, and the strands 284 are further woven to create the mesh 289. For example, a first strand 287 can extend along a vane 270 (FIG. 5), while a second strand 288 can extend along a stiffener 274 (FIG. 5) in a direction perpendicular to the first strand 287. Other examples of interlocking or woven fibers 282 can be utilized to form the mesh 289, including square or rectangular woven net, crimped net, flat stamped, diamond weave, basket weave, waffle weave, knitted, or knotted, in non-limiting examples. In still another example, twisted strands similar to those described in FIG. 4 can be woven to create the mesh 289.

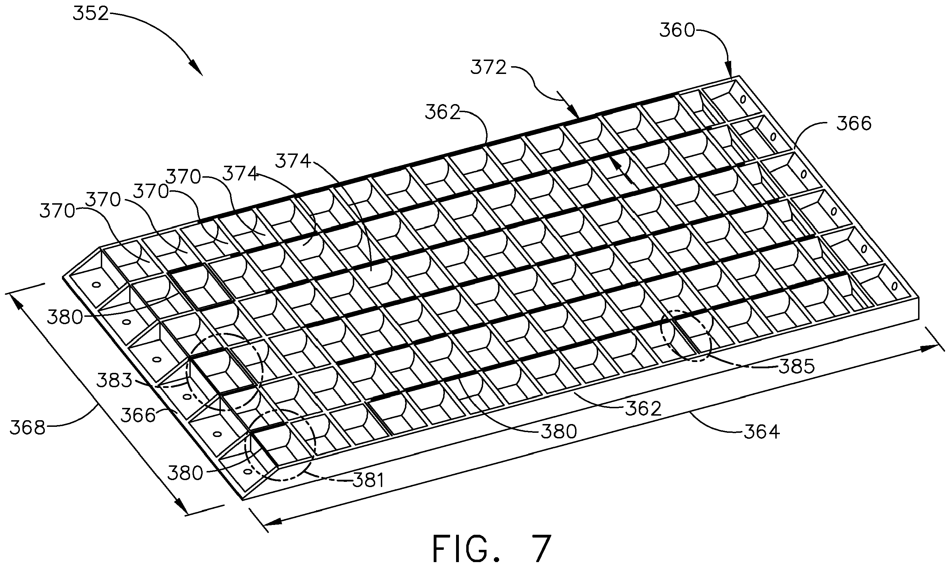

Turning to FIG. 7, another thrust reverser cascade 352 is illustrated which can be used in the cascade assembly 58. The thrust reverser cascade 352 is similar to the thrust reverser cascade 52; therefore, like parts will be identified with like numerals increased by 300, with it being understood that the like parts of the cascade 52 applies to the cascade 352, unless otherwise noted.

The thrust reverser cascade 352 includes a peripheral frame 360 with opposing frame sides 362 having side lengths 364, connected by opposing frame ends 366 having end lengths 368. A plurality of vanes 370 and a plurality of stiffeners 374 can also be included in the cascade 352.

The cascade 352 further includes a second reinforcement structure 380 made from a non-polymeric or composite material as described in FIG. 3. The second reinforcement structure 380 can be coupled to the frame sides 362 or ends 366, including fully along the length 364 of a frame side 362, fully along the length 368 of a frame end 366, or fully along a vane length 372 of a vane 370. The second reinforcement structure 380 can also be coupled to, or embedded within, at least a portion of a stiffener 374 as shown.

It is contemplated that the second reinforcement structure 380 can include a strip insert 390 within a vane 370, a stiffener 374, or a frame side 362 or end 366. The strip insert 390 can be metallic including, but not limited to, steel, aluminum, aluminum alloy, titanium, titanium alloy, nickel-chromium alloy. The strip insert 390 can also be made of a composite material including, but not limited to, a composite of thermosetting polymer and at least one of synthetic poly-amide fibers, carbon fibers, or fiberglass.

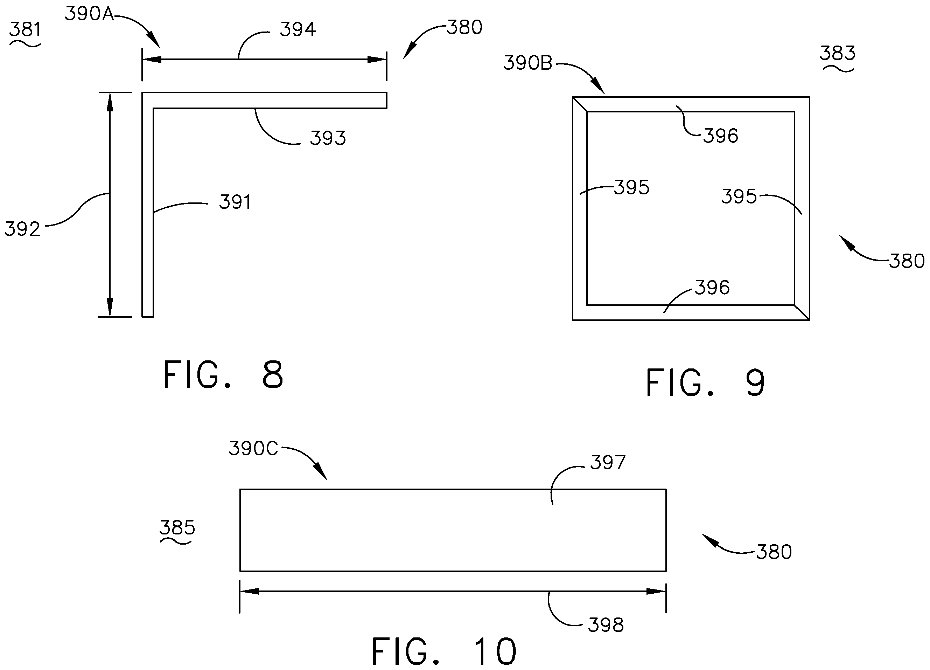

It is further contemplated that the strip insert 390 can include any desired geometric profile, including L-shaped, airfoil-shaped, rectangular, square, or round, in non-limiting examples. FIGS. 8 - 10 illustrate selected geometric profiles within a first portion 381, a second portion 383, and a third portion 385 of the third reinforcement structure 380 of FIG. 7.

In FIG. 8, the first portion 381 is illustrated as including a first strip insert 390A. The first strip insert 390A can include a first leg 391 with a first length 392, and a second leg 393 with a second length 394 and perpendicular to the first leg 391. In the example of FIG. 7, the first leg 391 can be positioned along a portion of a stiffener 374, while the second leg 393 can be positioned along a vane 370, with the first length 392 equal to the vane length 372. It is contemplated that the first and second lengths 392, 394 can have any desired size, and also that the first length 392 can be equal to, greater than, or less than the second length 394. Furthermore, the first strip insert 390A can be embedded within the vane 370 and stiffener 374, or disposed on the vane 370 and stiffener 374, or positioned anywhere within the cascade 352, in non-limiting examples.

In FIG. 9, the second portion 383 is illustrated as including a second strip insert 390B. The second strip insert 390B can include opposing insert sides 395 extending between opposing insert ends 396. In addition, while the second strip insert 390B is illustrated with a square profile, other profiles can also be utilized such as rectangular. Further, a customized number of insert sides 395 can be utilized in the second strip insert 390B to match an underlying geometry of the thrust reverser cascade 352. In the example of FIG. 7, the insert sides 395 can be positioned along vanes 370 while the insert ends 396 can be positioned along stiffeners 374.

FIG. 10 illustrates the third portion 385 of the third reinforcement structure 380 as a third strip insert 390C. The third strip insert 390C is illustrated as a single strip 397 with a length 398, similar to the first or second leg 391, 393 of FIG. 8, and can be embedded within, or disposed on, the cascade 352 of FIG. 7. Furthermore, in the example of FIG. 7 the single strip 397 is positioned along a vane 370 with the length 398 equal to the vane length 372. It is further contemplated that the length 398 can be any desired length, including greater or smaller than the vane length 372.

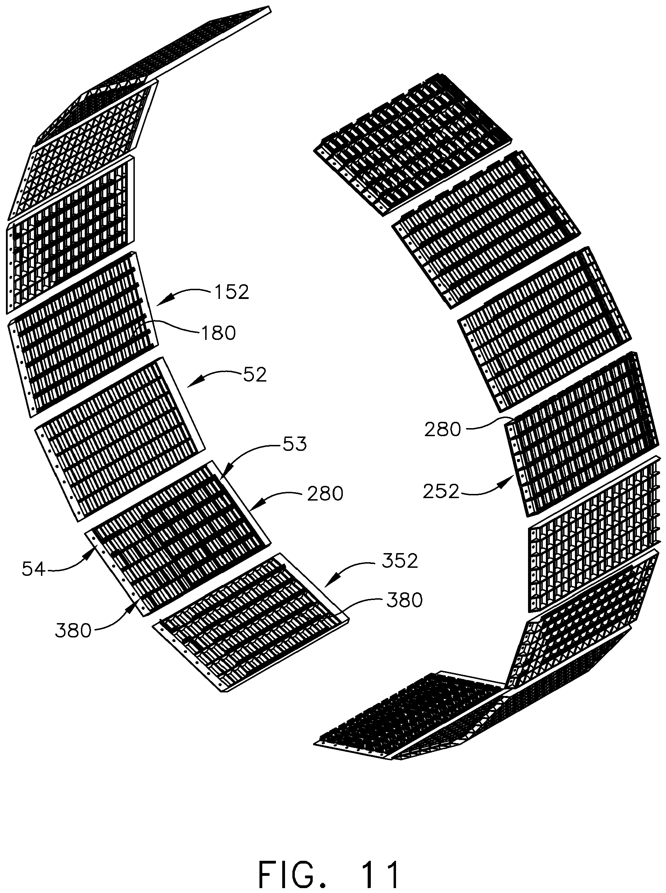

Turning to FIG. 11, the cascade assembly 58 is illustrated with cascades 52, 152, 252, 352 and respective reinforcement structures 180, 280, 380 according to various aspects described herein. It can be appreciated that stresses or loads on thrust reverser cascades can vary based on their position within the assembly 58. Thus, reinforcement structures can be selected for use based on a desired amount or type of strengthening within a cascade, or within a given region in a cascade. For example, a first portion 53 of an exemplary cascade 52 can include the second reinforcement structure 280 as described in FIGS. 5 and 6, while a second portion 54 of the exemplary cascade 52 can include the third reinforcement structure 380 as described in FIGS. 7 - 10.

It is contemplated that the selection of reinforcement structures within an exemplary cascade can be made based on a variety of factors including costs, weight, and reinforcement strength. In one example, a portion of a cascade can experience loads or stresses such that a fiber mesh would be selected for use instead of a fiber rope reinforcement structure. In another example, metal strip inserts and fiber rope reinforcement structures may both provide a desired reinforcement amount, and weight considerations could lead to selection of fiber rope for a given cascade. In still another example, non-reinforced cascades can be utilized in an assembly between adjacent reinforced cascades, which can further reduce costs.

A method of manufacturing a thrust reverser cascade, including any of the cascades 52, 152, 252, 352, includes forming a peripheral frame such as the frame 60, 160, 260, 360, from a polymeric first material as described in FIG. 2. A reinforcement structure, including any of the reinforcement structures 180, 280, 380, can be coupled to the peripheral frame. The reinforcement structure can be made from a second material different from the polymeric first material, such as a non-polymeric or composite material as described in FIGS. 3 and 7. The reinforcement structure can be embedded within the peripheral frame, including by way of injection molding the peripheral frame around the reinforcement structure. The reinforcement structure can also be coupled to the peripheral frame by fasteners, adhesives, or other attachment methods as described in FIG. 3.

Aspects of the present disclosure provide for a variety of benefits. The localized reinforcement of injection-molded cascades can provide for a stronger, lighter, more durable, and more cost-effective thrust reverser cascade compared to traditional cascades made from cast materials, additive manufacturing or resin transfer molding. In one example, cascades utilizing aspects described herein provided a 25% reduction in costs and 40% reduction in weight compared to traditionally-manufactured cascades.

The local reinforcement can further provide for optimization of the number and thickness of vanes, stiffeners, or other components utilized in the cascade to create more open space and maximize air flow through the cascade, which can increase the thrust reversal performance. The capability of fine-tuning or customizing reinforcements for cascades in an assembly can also provide for selective reinforcement of cascades in the assembly. For example, non-reinforced cascades can be utilized in a cascade assembly along with reinforced cascades, which can reduce manufacturing costs or weight. In addition, a cascade can be formed with reinforcements in only a portion instead of throughout the entire cascade, further reducing costs or weight while optimizing performance.

Various characteristics, aspects and advantages of the present invention may also be embodied in the following technical solutions as defined in the enumerated clauses:
1. A thrust reverser cascade comprising:
   an injection-molded peripheral frame having at least one side and made from a polymeric material;
   a plurality of vanes supported within the peripheral frame; and
   a reinforcement structure at least partially embedded within at least a portion of the frame and comprising twisted, braided, or woven fibers.
2. The thrust reverser cascade of clause 1 wherein the fibers are made from one of a non-polymeric material, a composite material, carbon, glass, shape memory alloy, steel, aluminum, aluminum alloy, titanium, titanium alloy, or nickel-chromium alloy.
3. A thrust reverser cascade comprising:
   an injection-molded peripheral frame having at least one side and made from a polymeric material;
   a plurality of vanes supported within the peripheral frame; and
   a reinforcement structure at least partially embedded within at least a portion of the frame and comprising strip inserts.
4. The thrust reverser cascade of clause 3 wherein the strip inserts are made from one of a non-polymeric material, a composite material, carbon, glass, shape memory alloy, steel, aluminum, aluminum alloy, titanium, titanium alloy, nickel-chromium alloy, or a composite of thermosetting polymer and at least one of poly-aramid fibers, carbon fibers, and fiberglass.
5. A thrust reverser cascade comprising:
   an injection-molded peripheral frame having opposing spaced sides and made from a polymeric first material;
   a plurality of stiffeners extending between the opposing spaced sides;
   a plurality of vanes supported within the peripheral frame, where a stiffener in the plurality of stiffeners extends between adjacent vanes; and
   a reinforcement structure made from a second material different from the polymeric first material, the reinforcement structure being at least partially embedded within at least a portion of the frame and comprising one of twisted fibers, braided fibers, woven mesh, or strip inserts;
   wherein the second material comprises one of a non-polymeric material, a composite material, carbon, glass, shape memory alloy, steel, aluminum, aluminum alloy, titanium, titanium alloy, nickel-chromium alloy, or a composite of thermosetting polymer and at least one of poly-aramid fibers, carbon fibers, and fiberglass.
6. A method of manufacturing a thrust reverser cascade, the method comprising:
   forming from a polymeric first material a peripheral frame for the thrust reverser cascade, the peripheral frame having opposing spaced sides and supporting a plurality of vanes therebetween; and
   coupling a non-polymeric or composite reinforcement structure to the peripheral frame.
7. The method of clause 6 wherein the coupling comprises embedding the reinforcement structure within the peripheral frame.
8. The method of clauses 6 or 7 wherein the forming comprises injection molding.
9. The method of clause 8 wherein the coupling comprises embedding the reinforcement structure within the peripheral frame during the injection molding.
10. The method of any of clauses 6-9 wherein the reinforcement structure comprises twisted or braided fibers.
11. The method of any of clauses 6-10 wherein the reinforcement structure comprises a woven mesh.
12. The method of any of clauses 6-11 wherein the reinforcement structure comprises strip inserts.
13. The method of any of clauses 6-12 wherein the polymeric first material comprises one of polyether ether ketone (PEEK), polyethylene terephthalate, high density polyethylene, polyvinyl chloride, polystyrene, polypropylene, polyesters, polybenzoxazine, polyurethane, silicone, phenolics, epoxy with amine, or epoxy with amide.
14. The method of any of clauses 6-13 wherein the reinforcement structure comprises one of carbon, glass, shape memory alloy, steel, aluminum, aluminum alloy, titanium, titanium alloy, nickel-chromium alloy, or a composite of thermosetting polymer and at least one of poly-aramid fibers, carbon fibers, and fiberglass.

This written description uses examples to disclose the present disclosure, including the best mode, and to enable any person skilled in the art to practice the present disclosure, including making and using any devices or systems and performing any incorporated methods. The patentable scope of the present disclosure is defined by the claims, and can include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A thrust reverser cascade (52, 152, 252, 352) comprising:
an injection-molded peripheral frame (60, 160, 260, 360) having at least one side (62, 66, 162, 166, 262, 266, 362, 366) and made from a polymeric first material;
a plurality of vanes (70, 170, 270, 370) supported within the peripheral frame (60, 160, 260, 360); and
a reinforcement structure (180, 280, 380) at least partially embedded within at least a portion of the frame (60, 160, 260, 360), the reinforcement structure (180, 280, 380) supporting at least a portion of the frame (60, 160, 260, 360) or vanes (70, 170, 270, 370) and made from a second material different from the polymeric first material.

2. The thrust reverser cascade (52, 152, 252, 352) of claim 1 wherein the polymeric first material comprises a thermoplastic material, thermoset material, polyether ether ketone (PEEK), polyethylene terephthalate, high density polyethylene, polyvinyl chloride, polystyrene, polypropylene, polyesters, polybenzoxazine, polyurethane, silicone, phenolics, epoxy with amine, or epoxy with amide.

3. The thrust reverser cascade (52, 152, 252, 352) of claim 1 wherein the second material comprises one of a non-polymeric material, a composite material, carbon, glass, shape memory alloy, steel, aluminum, aluminum alloy, titanium, titanium alloy, nickel-chromium alloy, or a composite of thermosetting polymer and at least one of poly-aramid fibers, carbon fibers, and fiberglass.

4. The thrust reverser cascade (52, 152, 252, 352) of claim 1 wherein the reinforcement structure (180, 280, 380) is embedded within at least one of the peripheral frame (60, 160, 260, 360) or the plurality of vanes (70, 170, 270, 370).

5. The thrust reverser cascade (52, 152, 252, 352) of claim 1 wherein the reinforcement structure (180, 280, 380) comprises twisted or braided fibers (182, 282).

6. The thrust reverser cascade (52, 152, 252, 352) of claim 1 wherein the reinforcement structure (180, 280, 380) comprises a woven mesh (289).

7. The thrust reverser cascade (52, 152, 252, 352) of claim 1 wherein the reinforcement structure (180, 280, 380) comprises strip inserts (390, 390A, 390B, 390C) with a geometric profile that is L-shaped, airfoil-shaped, rectangular, square, or round.

8. The thrust reverser cascade (52, 152, 252, 352) of claim 1 further comprising a first reinforcement structure (180, 280, 380) in a first portion (53) of the cascade (52, 152, 252, 352) and a second reinforcement structure (180, 280, 380) in a second portion (54) of the cascade (52, 152, 252, 352).

9. The thrust reverser cascade (52, 152, 252, 352) of claim 1 wherein the reinforcement structure (180, 280, 380) extends fully along a length (64, 68, 164, 168, 264, 268, 364, 368) of the at least one side (62, 66, 162, 166, 262, 266, 362, 366).

10. The thrust reverser cascade (52, 152, 252, 352) of claim 1 wherein the reinforcement structure (180, 280, 380) extends fully along a length (72, 172, 272, 372) of a vane (70, 170, 270, 370) in the plurality of vanes (70, 170, 270, 370).
